(19) Europäisches Patentamt
European Patent Office
Office européen des brevets

(11) **EP 0 970 841 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
***B60L 9/00*** (2006.01)

(21) Anmeldenummer: **99810563.9**

(22) Anmeldetag: **28.06.1999**

(54) **Verfahren zum Betrieb eines elektrischen Bahnfahrzeugs**

Process for operating an electric railway car

Procédé de fonctionnement pour une voiture de chemin de fer électrique

(84) Benannte Vertragsstaaten:
**AT BE CH CY DE DK ES FI FR GB GR IE IT LI LU MC NL PT SE**

(30) Priorität: **08.07.1998 DE 19830425**

(43) Veröffentlichungstag der Anmeldung:
**12.01.2000 Patentblatt 2000/02**

(73) Patentinhaber: **Bombardier Transportation GmbH 13627 Berlin (DE)**

(72) Erfinder:
• **Mossig, Kai, Dr.**
  **5400 Baden (CH)**
• **Petersen, Anders**
  **17274 Sundbyberg (SE)**

(74) Vertreter: **Cohausz & Florack Patent- und Rechtsanwälte Bleichstrasse 14 40211 Düsseldorf (DE)**

(56) Entgegenhaltungen:
**EP-A- 0 456 521          WO-A-91/03862**
**WO-A-96/08862          DE-A- 2 522 596**
**DE-A- 3 824 202**

• **HOLTZ J ET AL: "SUPPRESSION OF TIME-VARYING RESONANCES IN THE POWER SUPPLY LINE OF AC LOCOMOTIVES BY INVERTER CONTROL" IEEE TRANSACTIONS ON INDUSTRIAL ELECTRONICS, IEEE INC. NEW YORK, US, Bd. 39, Nr. 3, 1. Juni 1992 (1992-06-01), Seiten 223-229, XP000301583 ISSN: 0278-0046**
• **HOLTZ J ET AL: "ADAPTIVE OPTIMAL PULSEWIDTH MODULATION FOR THE LINE-SIDE CONVERTER OF ELECTRIC LOCOMOTIVES" PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, Bd. 2 CONF. 3, 9. Oktober 1989 (1989-10-09), Seiten 567-572, XP000143448**
• **HOLTZ J ET AL: "ON-LINE IDENTIFICATION OF THE RESONANCE CONDITIONS IN THE OVERHEAD SUPPLY LINE OF ELECTRIC RAILWAYS" PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, Bd. 1 CONF. 3, 9. Oktober 1989 (1989-10-09), Seiten 385-390, XP000143422**

**Beschreibung**

Technisches Gebiet

Die Erfindung betrifft ein Verfahren zum Betrieb eines elektrischen Bahnfahrzeugs gemäss Oberbegriff von Anspruch 1.

Stand der Technik

Werden Bahnfahrzeuge mit Umrichter-Antriebstechnik auf einem Bahnnetz betrieben, so kann es zu Stabilitätsproblemen kommen. Ein Hauptgrund dafür ist die Eigenschaft der Bahnfahrzeuge, nicht nur auf der Grundfrequenz sondern auch auf harmonischen Frequenzen Energie in das Netz einzuspeisen. Dies ist dann problematisch, wenn das Netz bei einer dieser harmonischen Frequenzen zu Schwingungen neigt.

Um Stabilitätsprobleme zu vermeiden, können die Umrichter so ausgestaltet werden, dass sich die Fahrzeuge für alle Frequenzen oberhalb der Grundfrequenz passiv verhalten. Dies führt jedoch zu einem wesentlichen Verlust an Leistungsfähigkeit.

Zur Lösung dieses Problems wird in J. Holtz und J.O. Krah, "On-line identification of the resonance conditions in the overhead supply line of electric railways" und "Adaptive optimal pulsewidth modulation for the line-side converter of electric locomotives", Proceedings of EPE, Aachen, 1989, pp 385ff bzw. 567ff vorgeschlagen, das Bahnnetz rechnerisch durch ein kompliziertes Modell aus Schwingkreisen zu ersetzen und eine Transferfunktion zu berechnen, die dessen Resonanzen beschreibt. Dies ist jedoch sowohl numerisch als auch messtechnisch aufwendig.

Darstellung der Erfindung

Es stellt sich deshalb die Aufgabe, ein Verfahren der eingangs genannten Art bereitzustellen, das Stabilitätsprobleme im Bahnnetz auf möglichst einfache Weise vermeidet, ohne dass die Leistungsfähigkeit des Bahnfahrzeugs stark beeinträchtigt wird.

Diese Aufgabe wird vom Verfahren gemäss Anspruch 1 gelöst.

Erfindungsgemäss wird also lediglich bei mindestens einer Frequenz die (komplexe) Impedanz des Bahnnetzes vom Bahnfahrzeug aus gemessen und sodann wird die Impedanz des Fahrzeugs nötigenfalls angepasst. Auf diese Weise kann das Fahrzeug zu einer passiven, dämpfenden Last werden, falls das Bahnnetz Gefahr läuft, auf der gegebenen Frequenz instabil zu werden.

Vorzugsweise wird mit der Fahrzeug- und Netzimpedanz ein Stabilitätskriterium geprüft. Wenn dieses nicht erfüllt ist, so wird die Fahrzeugimpedanz so geändert, dass wieder ein stabiler Zustand erreicht wird. Insbesondere kann zur Stabilisierung des Netzes die Fahrzeugimpedanz derart gewählt werden, dass deren Argument zwischen -90° und 90° liegt.

In einer besonders vorteilhaften Ausführung wird die Stabilität des Netzes nur für einige wenige Frequenzen, insbesondere für harmonische Frequenzen der Grundfrequenz, geprüft. Durch gezielte Überwachung dieser besonders gefährdeten Frequenzen kann in der Praxis mit geringem Aufwand eine ausreichende Stabilität sichergestellt werden.

Zur Messung der Netzimpedanz werden vorzugsweise die Spannung und der Strom über dem bzw. durch das Fahrzeug bei unterschiedlichen Fahrzeugimpedanzen gemessen.

Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:

    Fig. 1 ein Ersatzschaltbild für das Bahnnetz mit einem Schienenfahrzeug, und
    Fig. 2 den Entscheidungsablauf im Bahnfahrzeug zur Wahl der Lastimpedanz.

Weg zur Ausführung der Erfindung

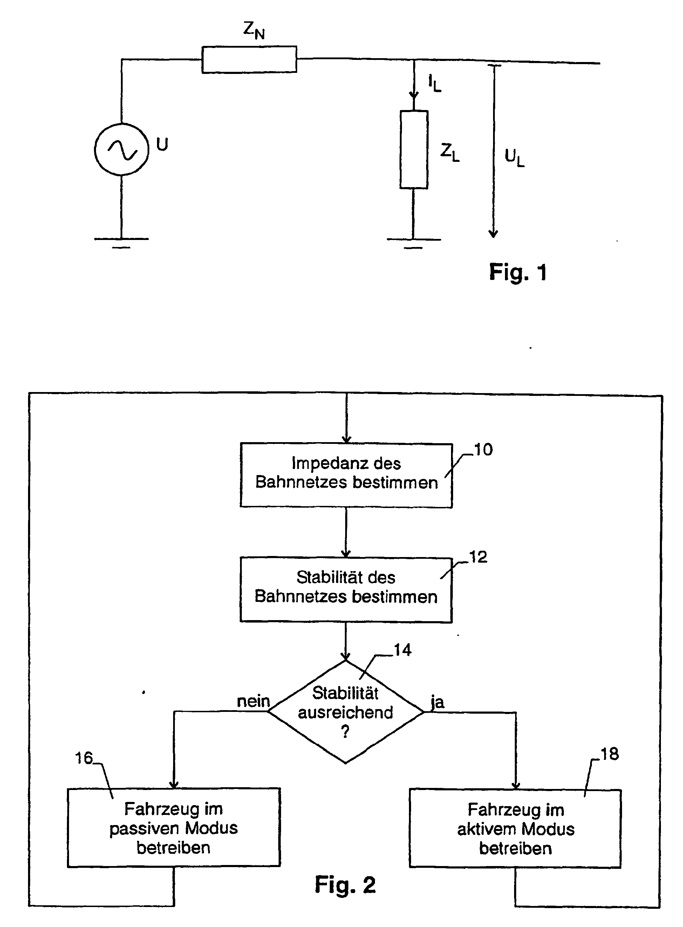

In Fig. 1 wird die elektrische Situation eines Bahnnetzes gezeigt, wie sie sich (in linearisierter Näherung) für ein Schienenfahrzeug darstellt. Die Spannung wird von einer Spannungsquelle U mit einer Grundfrequenz $\omega_o$ von z.B. 16 2/3 Hz geliefert. Die elektrischen Eigenschaften des Netzes werden durch eine (komplexe) Netzimpedanz $Z_N$ dargestellt. Das Bahnfahrzeug selbst bildet eine Lastimpedanz $Z_L$, und über dem Bahnfahrzeug liegt eine Spannung $U_L$. Die Impedanzwerte $Z_L$ und $Z_N$ sind frequenzabhängig.

Der Wert der Netzimpedanz $Z_N$ hängt insbesondere von der Geometrie des Bahnnetzes und den Positionen und Betriebszuständen der übrigen Bahnfahrzeuge ab.

Die Lastimpedanz $Z_L$ hängt davon ab, mit welcher Last das Bahnfahrzeug fährt und wie der Umrichter des Bahnfahrzeugs betrieben wird. Je nach Betriebszustand kann das Argument der Lastimpedanz $Z_L$ zwischen -90° und 90° oder zwischen 90° und 270° liegen. In ersterem Fall wird das Fahrzeug für die entsprechende Frequenz als "passiv", ansonsten als "aktiv" bezeichnet.

Das Grundprinzip der vorliegenden Erfindung liegt nun darin, den Wert der Lastimpedanz $Z_L(\omega)$ für eine oder mehrere Frequenzen o oberhalb der Grundfrequenz $\omega_o$ abhängig von der Netzimpedanz $Z_N(\omega)$ so zu wählen, dass die Stabilität des Systems gewährleistet bleibt. Hierzu muss das Bahnfahrzeug die Netzimpedanz $Z_N(\omega)$ bestimmen, was in einer weiter unten beschriebenen Weise geschieht.

Aus dem ermittelten Wert der Netzimpedanz $Z_N(\omega)$ kann sodann ermittelt werden, ob eine gegebene Lastimpedanz $Z_L(\omega)$ zu Instabilitäten führen kann. Das System nach Fig. 1 ist in elektrotechnischem Sinne dann stabil, wenn es nach einer vorübergehend angelegten Störung automatisch wieder in Ruhe kommt. Techniken zur Prüfung bzw. Berechnung der Stabilität eines Systems gemäss Fig. 1 sind dem Fachmann bekannt und brauchen hier nicht weiter diskutiert zu werden. Beispielsweise können die Stabilitätskriterien nach Hurwitz oder Nyquist beigezogen werden.

In einer einfachsten Ausführung, welche in praktischen Fällen zu einer sehr konservativen Betriebsweise mit hoher Stabilität führt, kann z.B. der Wert

$$G_{OL} = Z_N/Z_L \qquad\qquad (1)$$

berechnet werden. Das System wird sodann als instabil betrachtet, wenn die folgenden zwei Kriterien erfüllt sind:

$$Re(G_{OL}) < -1, \qquad\qquad\qquad (2)$$

$$|Im(G_{OL})| < \varepsilon, \qquad\qquad\qquad (3)$$

wobei $\varepsilon$ ein vorgegebener Grenzwert ist. Sind die Bedingungen (2) und (3) beide erfüllt, so wird davon ausgegangen, dass das System instabil sein kann. In diesem Fall wird die Lastimpedanz $Z_L(\omega)$ durch geeignete Steuerung des Umrichters des Bahnfahrzeugs derart geändert, dass der Wert $G_{OL}$ zumindest eine der Bedingungen (2) und (3) nicht erfüllt.

Ein Verfahren zur Anpassung der Lastimpedanz $Z_L(\omega)$ mittels geeigneter Umrichtersteuerung ist z.B. in J. Holtz und J.O. Krah, "Adaptive optimal pulsewidth modulation for the line-side converter of electric locomotives", Proceedings of EPE, Aachen 1989, pp 567 beschrieben.

Wie aus Fig. 2 ersichtlich, misst das Bahnfahrzeug also wiederholt die Impedanz $Z_N$ des Bahnnetzes (Schritt 10) und bestimmt die Stabilität des Systems (Schritt 12, 14). Zeigt sich keine ausreichende Stabilität für einen "aktiven" Wert der Lastimpedanz $Z_L$, so wird das Fahrzeug im "passiven" Modus betrieben (Schritt 16). Hierzu wird die Lastimpedanz $Z_L$ so gewählt, dass das verwendete Stabilitätskriterium erfüllt wird. Zeigt es sich, dass eine ausreichende Stabilität erreicht wird, so kann das Fahrzeug im "aktiven" Modus betrieben werden (Schritt 18). Auf diese Weise wird sichergestellt, dass der momentane Wert der Lastimpedanz $Z_L$ immer so gewählt ist, dass das Stabilitätskriterium erfüllt ist, und dass, soweit der Zustand des Bahnnetzes dies zulässt, wenn immer möglich das Bahnfahrzeug im effizienteren aktiven Modus betrieben wird.

Zur Ausführung des Schritts 10 gemäss Fig. 2 muss das Bahnfahrzeug in der Lage sein, die Netzimpedanz $Z_N$ zu messen. Dies geschieht dadurch, dass die Spannung $U_L$ über dem Bahnfahrzeug und der Strom $I_L$ durch das Bahnfahrzeug für zwei verschiedene Werte der Lastimpedanz $Z_L$ gemessen werden. Hierzu kann der Umstand ausgenutzt werden, dass die Impedanz $Z_L$ auf unterschiedliche Werte eingestellt werden kann. Bezeichnet man die Ströme und Spannungen für einen ersten Wert der Lastimpedanz mit $I_{LA}$ und $U_{LA}$, diejenigen für einen zweiten Wert der Lastimpedanz (nach einem Lastsprung) mit $I_{LB}$ und $U_{LB}$, so ergibt sich die Netzimpedanz $Z_N$ aus

$$Z_N = - (U_{LA}-U_{LB})/(I_{LA}-I_{LB}) \qquad\qquad (4)$$

Gemessen wird einmal vor und einmal nach dem Lastsprung. Der Lastsprung kann z.B. durch Zu- oder Abschalten eines Kondensators oder Widerstands, also durch physikalische Änderung der Last, oder durch Eingriffe in die Regelung der Lokomotive erreicht werden. Die Messung nach Gleichung (4) führt nur dann zu realistischen Resultaten, wenn sich $Z_N$ und $Z_L$ während der Messungen nicht verändern.

Da nur der Zeitverlauf von $U_L$ und $I_L$ gemessen wird, werden diese Werte jeweils über mindestens eine Periode der Grundfrequenz hinweg abgetastet und gespeichert. Eine anschliessende Fourier-Transformation erlaubt sodann die Bestimmung von $Z_N(\omega)$ bzw. der Phasen und Amplituden der Ströme und Spannungen.

Wie eingangs erwähnt, wird die Prüfung gemäss Fig. 2 vorzugsweise nur für einige wenige harmonische Oberfrequenzen der Netz-Grundfrequenz $\omega_o$ durchgeführt, z.B. für die dritte und fünfte Harmonische. Es ist jedoch auch denkbar, einen grösseren Frequenzbereich oberhalb der Grundfrequenz $\omega_o$ des Bahnnetzes zu prüfen.

Bezugszeichenliste:

| | |
|---|---|
| 10 - 18: | Schritte der Ablaufsteuerung |
| $G_{OL}$: | open loop gain |
| $I_L$: | Strom durch das Bahnfahrzeug |
| $I_{LA}$, $I_{LB}$: | Strom durch das Bahnfahrzeug vor und nach einem Lastsprung |
| $U_L$: | Spannung über dem Bahnfahrzeug |
| $U_{LA}$, $U_{LB}$: | Spannung über dem Bahnfahrzeug vor und nach einem Lastsprung |
| $Z_N$: | Netzimpedanz |
| $Z_L$: | Lastimpedanz |
| $\omega$: | Messfrequenz |
| $\omega_o$: | Netz-Grundfrequenz |

**Patentansprüche**

1. Verfahren zum Betrieb eines elektrischen Bahnfahrzeugs mit Rekuperation an einem auf einer Grundfrequenz ($\omega_o$) betriebenen Bahnnetz, **dadurch gekennzeichnet,**
   **dass** vom Bahnfahrzeug auf mindestens einer Frequenz ($\omega$) oberhalb der Grundfrequenz eine Impedanz ($Z_N$) des Bahnnetzes gemessen wird, und
   **dass** die Impedanz ($Z_L$) des Bahnfahrzeugs auf der mindestens einen Frequenz ($\omega$) abhängig von der gemessenen Impedanz ($Z_N$) des Bahnnetzes derart gewählt wird, dass Instabilitäten vermieden werden.

2. Verfahren nach Anspruch 1, **dadurch gekennzeichnet, dass** aus der gemessenen Impedanz ($Z_N$) des Bahnnetzes und der momentanen Impedanz ($Z_L$) des Bahnfahrzeugs bei der mindestens einen Frequenz ($\omega$) ein Stabilitätskriterium geprüft wird, und dass, wenn das Stabilitätskriterium nicht erfüllt ist, die Impedanz ($Z_L$) des Fahrzeugs derart geändert wird, dass das Stabilitätskriterium wieder erfüllt wird.

3. Verfahren nach einem der vorangehenden Ansprüche, **dadurch gekennzeichnet, dass** bei drohender Instabilität die Impedanz ($Z_L$) des Bahnfahrzeugs derart geändert wird, dass deren Argument zwischen -90° und 90° liegt.

4. Verfahren nach einem der vorangehenden Ansprüche, **dadurch gekennzeichnet, dass** die Impedanz ($Z_N$) des Bahnnetzes nur auf harmonischen Frequenzen der Grundfrequenz ($\omega_o$) gemessen wird.

5. Verfahren nach einem der vorangehenden Ansprüche, **dadurch gekennzeichnet, dass** die Impedanz ($Z_N$) des Bahnnetzes gemessen wird, indem die Spannung ($U_L$) über dem Bahnfahrzeug und der Strom ($I_L$) durch das Bahnfahrzeug für mindestens zwei verschiedene Impedanzen ($Z_L$) des Bahnfahrzeugs gemessen werden.

6. Verfahren nach Anspruch 5, **dadurch gekennzeichnet, dass** die Phase und Amplitude der Spannung ($U_L$) und des Stroms ($I_L$) bei der mindestens einen Frequenz aus einer Fouriertransformation des Zeitverlaufs der Spannung ($U_L$) und des Stroms ($I_L$) ermittelt werden.

**Claims**

1. Method for operating an electric railway vehicle with recuperation on a railway network operated at a base frequency ($\omega_o$), **characterised in that**
   an impedance ($Z_N$) of the railway network is measured by the railway vehicle at at least one frequency ($\omega$) above the base frequency and **in that**

the impedance ($Z_L$) of the railway vehicle at the at least one frequency ($\omega$) is selected depending on the measured impedance ($Z_N$) of the railway network so as to avoid instabilities.

2. The method according to claim 1, **characterised in that** a stability criterion is checked from the measured impedance ($Z_N$) of the railway network and the instantaneous impedance ($Z_L$) of the railway vehicle at the at least one frequency ($\omega$) and, if the stability criterion is not satisfied, the impedance ($Z_L$) of the vehicle is varied so that the stability criterion is satisfied again.

3. The method according to any one of the preceding claims, **characterised in that** under impending instability, the impedance ($Z_L$) of the railway vehicle is varied such that its argument lies between -90° and 90°.

4. The method according to any one of the preceding claims, **characterised in that**, the impedance ($Z_N$) of the railway network is only measured at harmonic frequencies of the base frequency ($\omega_o$).

5. The method according to any one of the preceding claims, **characterised in that** the impedance ($Z_N$) of the railway network is measured by measuring the voltage ($U_L$) across the railway vehicle and the current ($I_L$) through the railway vehicle for at least two different impedances ($Z_L$) of the railway vehicle.

6. The method according to claim 5, **characterised in that** the phase and amplitude of the voltage ($U_L$) and the current ($I_L$) at the at least one frequency are determined from a Fourier transformation of the time behaviour of the voltage ($U_L$) and the current ($I_L$).

### Revendications

1. Procédé d'actionnement d'un véhicule ferroviaire électrique par récupération d'un réseau ferroviaire fonctionnant à une fréquence de base ($\omega_o$), **caractérisé en ce que**
le véhicule ferroviaire mesure, sur au moins une fréquence ($\omega$) au dessus de la fréquence de base, une impédance ($Z_N$) du réseau ferroviaire et **en ce que**
l'impédance ($Z_L$) du véhicule ferroviaire sur l'au moins une fréquence ($\omega$) est choisie en fonction de l'impédance mesurée ($Z_N$) du réseau ferroviaire de manière à éviter les instabilités.

2. Procédé selon la revendication 1, **caractérisé en ce que**, à partir de l'impédance mesurée ($Z_N$) du réseau ferroviaire et de l'impédance momentanée ($Z_L$) du véhicule ferroviaire à l'au moins une fréquence ($\omega$), on contrôle un critère de stabilité et que, si le critère de stabilité n'est pas satisfait, on change l'impédance ($Z_L$) du véhicule de manière à ce que le critère de stabilité soit de nouveau satisfait.

3. Procédé selon une des revendications précédentes, **caractérisé en ce que**, lorsqu'il y a une menace d'instabilité, l'impédance ($Z_L$) du véhicule ferroviaire est modifiée de manière à ce que son argument se situe entre - 90° et 90°.

4. Procédé selon une des revendications précédentes, **caractérisé en ce que** l'impédance ($Z_N$) du réseau ferroviaire est mesurée uniquement sur des fréquences harmoniques de la fréquence de base ($\omega_o$).

5. Procédé selon une des revendications précédentes, **caractérisé en ce que** l'impédance ($Z_N$) du réseau ferroviaire est mesurée en mesurant la tension ($U_L$) sur le véhicule ferroviaire et que le courant ($I_L$) est mesuré par le véhicule ferroviaire pour au moins deux impédances différentes ($Z_L$) du véhicule ferroviaire.

6. Procédé selon la revendication 5, **caractérisé en ce que** la phase et l'amplitude de la tension ($U_L$) et du courant ($I_L$) à l'au moins une fréquence sont déterminées à partir d'une transformation Fourier de l'évolution temporelle de la tension ($U_L$) et du courant ($I_L$).

**Fig. 1**

| Impedanz des Bahnnetzes bestimmen | 10 |
| Stabilität des Bahnnetzes bestimmen | 12 |

Stabilität ausreichend ? — 14

nein

ja

16 — Fahrzeug im passiven Modus betreiben

18 — Fahrzeug im aktivem Modus betreiben

**Fig. 2**